# EUROPEAN PATENT APPLICATION

(11) **EP 4 411 918 A1**
(43) Date of publication of application: **07.08.2024**
(21) Application number: 22875488.3
(22) Date of filing: 20.06.2022
(51) Int. Cl.: H01M 10/0562, C01B 25/14, H01B 1/06, H01B 1/10, H01B 13/00, H01M 10/052

(54) **SULFIDE SOLID ELECTROLYTE AND METHOD FOR PRODUCING SAME**

(30) Priority: 30.09.2021 JP 2021162228
(71) Applicant: AGC INC., Chiyoda-ku, Tokyo 1008405 (JP)
(72) Inventor: KITAMURA, Riku, Tokyo 100-8405 (JP); FUJII, Naoki, Tokyo 100-8405 (JP)
(74) Representative: Müller-Boré & Partner Patentanwälte PartG mbB
(86) International application number: PCT/JP2022/024582
(87) International publication number: WO 2023/053609

(57) **Abstract**

The present invention relates to a sulfide solid electrolyte which is used for lithium ion secondary batteries and contains a crystal phase and anions, wherein: the crystal phase contains an argyrodite crystal that contains Li, P, S and Ha (Ha is F, Cl, Br and/or I); the anions comprise oxide anions that have a P-0 bond; at least some of the anions are polyanion structures that are different from the anions that constitute the argyrodite crystal; if the overall composition thereof is expressed by LiaMSbHacOx (wherein M represents at least one element including P, the at least one element being selected from the group consisting of group 2-15 metal elements of the periodic table and semimetal elements), 4 < a < 7, 3 < b < 6, 0 < c < 2, 0 < x and 3 < (b + c) < (6 - (x/2)) are satisfied; and 60% or more of the total content of 0 is bonded to M.

## Description

### TECHNICAL FIELD

The present invention relates to a sulfide solid electrolyte to be use for a lithium-ion secondary battery and a method for producing the sulfide solid electrolyte.

### BACKGROUND ART

Lithium-ion secondary batteries are widely used for a portable electronic device such as a mobile phone and a notebook computer.

In related art, a liquid electrolyte has been used in a lithium-ion secondary battery, but there is a concern of liquid leakage, ignition, and the like, and it has been necessary to increase the size of a case for safety design. The lithium-ion secondary batteries have also been desired to be improved in terms of short battery life and narrow operating temperature range.

On the other hand, attention has been paid to an all-solid-state lithium-ion secondary battery in which a solid electrolyte is used as an electrolyte of a lithium-ion secondary battery, from the viewpoint of improving safety, charging and discharging at a high speed, and reducing the size of a case.

The solid electrolytes are roughly classified into sulfide solid electrolytes and oxide solid electrolytes. Sulfide ions constituting the sulfide solid electrolytes have higher polarizability and higher lithium ion conductivity than those of oxide ions constituting the oxide solid electrolytes. As the sulfide solid electrolytes, LGPS crystals such as Li₁₀GeP₂S₁₂, argyrodite crystals such as Li₆PS₅Cl, LPS crystallized glasses such as Li₇P₃S₁₁ crystallized glasses, and the like have been known.

Patent Literature 1 discloses a sulfide solid electrolyte containing an argyrodite crystal. The sulfide solid electrolyte disclosed in Patent Literature 1 has a cubic crystal structure belonging to a space group F-43m, and contains a compound represented by a composition formula: Li₇₋ₓPS_{6-X}Hax (in which Ha represents Cl or Br) (in which x = 0.2 to 1.8), and a lightness L value of an L* a* b* color system is 60.0 or more. This is intended to improve the charge and discharge efficiency and the cycle characteristics by increasing the lithium ion conductivity and decreasing the electron conductivity.

### CITATION LIST

### PATENT LITERATURE

Patent Literature 1: WO2015/012042

### SUMMARY OF INVENTION

### TECHNICAL PROBLEM

The sulfide solid electrolyte containing the argyrodite crystal has large resistance between particles called grain boundary resistance. Therefore, as a method for obtaining high lithium ion conductivity, reduction of the grain boundary resistance due to the sintering can be considered.

However, when a heat treatment is performed at a high temperature for the sintering, the lithium ion conductivity will actually decrease due to thermal decomposition. Specifically, for example, in the case of the argyrodite crystal represented by a composition of Li₆PS₅Cl, when the heat treatment is performed at a high temperature of about 600°C, the argyrodite crystal thermally decomposes into Li₂S, LiCI, and Li₃PS₄.

As described above, for the sulfide solid electrolyte containing the argyrodite crystal, there is a limit to the heat treatment at the high temperature to reduce the grain boundary resistance.

Therefore, an object of the present invention is to provide a sulfide solid electrolyte having lithium ion conductivity required for a solid electrolyte to be used for a lithium-ion secondary battery and also having excellent heat resistance, and a method for producing the sulfide solid electrolyte.

### SOLUTION TO PROBLEM

As a result of intensive studies, the present inventors have found that the above problems can be solved by allowing a polyanionic structure, which is an oxide anion having a P-0 bond, to exist separately from an anion that constitutes the argyrodite crystal, without causing a shortage of a P component that constitutes the argyrodite crystal, and have completed the present invention.

That is, the present invention relates to the following [1] to [11].
[1] A sulfide solid electrolyte to be used for a lithium-ion secondary battery, the sulfide solid electrolyte including:
   a crystal phase and an anion, in which
   the crystal phase includes an argyrodite crystal containing Li, P, S, and Ha,
   the Ha is at least one element selected from the group consisting of F, Cl, Br, and 1,
   the anion includes an oxide anion having a P-0 bond in which P and 0 are bonded,
   at least a part of the oxide anion having the P-0 bond is different from an anion constituting the argyrodite crystal and constitutes a polyanionic structure,
   when an entire composition of the sulfide solid electrolyte is LiₐMS_{b}Ha_{c}Oₓ, relationships of 4 < a < 7, 3 < b < 6, 0 < c < 2, 0 < x, and 3 < (b + c) < {6 - (x/2)} are satisfied,
   the M is at least one element selected from the group consisting of a metal element and a metalloid element in groups 2 to 15 of a periodic table, the at least one element including at least P, and
   60% or more of a total content of 0 is bonded to the M.
[2] The sulfide solid electrolyte according to the [1], in which the polyanionic structure includes at least PO₄³⁻ and PO₂S₂³⁻,
   a relationship of 0.1 < {[PO₄³⁻]/([PO₄³⁻] + [POS₃³⁻] + [PO₂S₂³⁻] + [PO₃S³⁻])} ≤ 0.5 is satisfied, the relationship being expressed by a content represented by mol%, and
   among contents of PO₄³⁻, POS₃³⁻, PO₂S₂³⁻ and PO₃S³⁻, a content of PO₂S₂³⁻ is highest.
[3] The sulfide solid electrolyte according to the [1] or [2], in which a relationship of 0.5 < {([O]_{T} - [O]_{A})/[O]_{T}} < 1 is satisfied where [O]_{T} is a total content of O and [O]_{A} is a total content of O constituting a crystal structure of the crystal phase.
[4] The sulfide solid electrolyte according to any one of the [1] to [3], in which a total content of lithium halide, lithium phosphate, and lithium thiophosphate is 0.6 mass% or less.
[5] The sulfide solid electrolyte according to any one of the [1] to [4], in which relationships of 0 < x < 1 and {3.5 - (x/2)} < (b + c) < {6 - (x/2)} are further satisfied in the entire composition of LiₐMS_{b}Ha_{c}Oₓ.
[6] The sulfide solid electrolyte according to any one of the [1] to [5], in which the argyrodite crystal includes Cl as the Ha.
[7] The sulfide solid electrolyte according to any one of the [1] to [6], in which the argyrodite crystal includes Cl and Br as the Ha.
[8] The sulfide solid electrolyte according to the [7], in which a relationship of 0.1 ≤ (c1/c2) < 10 is satisfied where cl (at%) is a content of Cl in the argyrodite crystal and c2 (at%) is a content of Br in the argyrodite crystal.
[9] A method for producing a sulfide solid electrolyte to be used for a lithium-ion secondary battery, the method including:
   mixing a raw material containing Li, P, S, and Ha and a compound to be an oxygen source to obtain a raw material mixture;
   heating the raw material mixture to obtain a molten material; and
   cooling the molten material to obtain an argyrodite crystal and a polyanionic structure of an oxide anion that has a P-0 bond and is different from an anion constituting the argyrodite crystal, in which
   the Ha is at least one element selected from the group consisting of F, Cl, Br, and 1,
   the compound to be the oxygen source contains at least one selected from the group consisting of Li₂CO₃, Li₂SO₄, and Li₃PO₄, and
   in the raw material mixture, a content of P is in a molar ratio of 0.5 to 0.8 with respect to a content of the Ha.
[10] The method for producing a sulfide solid electrolyte according to the [9], in which the heating is performed at a temperature of 650°C or higher.
[11] The method for producing a sulfide solid electrolyte according to the [9] or [10], in which the cooling is performed at a cooling rate of 0.01°C/sec or more.

### ADVANTAGEOUS EFFECTS OF INVENTION

According to the present invention, a sulfide solid electrolyte which is excellent in heat resistance and contains an argyrodite crystal is obtained. Therefore, when the sulfide solid electrolyte is applied to a lithium-ion secondary battery, high lithium ion conductivity can be achieved without thermal decomposition even when a heat treatment is performed to reduce grain boundary resistance. Accordingly, it is expected that battery characteristics of the lithium-ion secondary battery can be improved.

### DESCRIPTION OF EMBODIMENTS

Hereinafter, the present invention will be described in detail, but the present invention is not limited to the following embodiment and can be freely modified and implemented without departing from the gist of the present invention. In addition, the symbol "-" or the word "to" that is used to express a numerical range includes the numerical values before and after the symbol or the word as the upper limit and the lower limit of the range, respectively.

### <Sulfide Solid Electrolyte>

A sulfide solid electrolyte according to the present embodiment (hereinafter, may be simply referred to as a "solid electrolyte") is used for a lithium-ion secondary battery, and includes a crystal phase and an anion.

The crystal phase includes an argyrodite crystal containing Li, P, S, and Ha, and the Ha is at least one element selected from the group consisting of F, Cl, Br, and I.

The anion includes an oxide anion having a P-0 bond in which P and 0 are bonded. At least a part of the oxide anion having the P-0 bond is different from an anion constituting the argyrodite crystal and constitutes a polyanionic structure.

When an entire composition of the sulfide solid electrolyte is LiₐMS_{b}Ha_{c}Oₓ, relationships of 4 < a < 7, 3 < b < 6, 0 < c < 2, 0 < x, and 3 < (b + c) < {6 - (x/2)} are satisfied. Here, the M is at least one element selected from the group consisting of a metal element and a metalloid element in groups 2 to 15 of a periodic table, the at least one element including at least P.

Among a total content of O contained in the sulfide solid electrolyte, 60% or more of O is bonded to the M.

Since the polyanionic structure of the oxide anion having the P-0 bond is present separately from the anion constituting the argyrodite crystal, heat resistance of the argyrodite crystal is improved due to strength of electrostatic attraction between the polyanionic structure and lithium cations. Therefore, even if a heat treatment is performed at a high temperature, the argyrodite crystal can stably exist without thermal decomposition. Accordingly, when the sulfide solid electrolyte is applied to the lithium-ion secondary battery, the sulfide solid electrolyte can be sintered to reduce grain boundary resistance.

From the above viewpoint, it is preferable that, in a total oxygen (0) quantity contained in the sulfide solid electrolyte, that is, a total content of O, an amount of O bonded to P be large, that is, it is preferable that an amount of 0 forming an M-0 bond by combining with the M containing P be large. Therefore, in the sulfide solid electrolyte according to the present embodiment, 60% or more of the total content of 0 is bonded to the M to form an M-0 bond.

When a compound to be an oxygen source is added to form the M-O bond, while the M-0 bond is formed, a part of P that is originally supposed to form the argyrodite crystal also forms a P-0 bond, resulting in a shortage of a P component. When the P component is insufficient, a ratio of P and the Ha for constituting the argyrodite crystal becomes inappropriate. As a result, in addition to the argyrodite crystal, impurity crystals such as lithium halide crystals, lithium phosphate crystals, and lithium thiophosphate crystals are precipitated. The presence of the impurity crystals leads to a decrease in lithium ion conductivity.

Here, the sulfide solid electrolyte according to the present embodiment increases a proportion of the M including P in the entire composition. Specifically, when the entire composition of the sulfide solid electrolyte is represented by LiₐMS_{b}Ha_{c}Oₓ, a relationship of 3 < (b + c) < {6 - (x/2)} is satisfied.

Among these, {6 - (x/2)} is derived from a matter that, in addition to PO₄³⁻, POS₃³⁻, PO₂S₂³⁻, and PO₃S³⁻ are formed as the polyanionic structure, and PO₂S₂³⁻ is most likely to be observed among them. First, since general argyrodite is represented by Li_{7-y}PS_{6-y}Ha_{y}, a value represented by (b + c) is generally 6 with respect to P. Next, when PO₂S₂³⁻ is formed, P having an amount that is half (1/2) of an amount of oxygen (0) contributes to the formation of the polyanionic structure. Therefore, it is assumed that, among the amount x of oxygen (0) in the entire composition, half x/2 is used for oxidizing the M containing P to form the M-O bond.

That is, the above relational expression is a relational expression corresponding to an amount of the M that is required in excess due to the presence of the oxide anion in constructing the argyrodite crystal.

By satisfying the above relationship, the polyanionic structure of the oxide anion having the P-0 bond can be formed, without running out of the P component constituting the argyrodite crystal and separately from the anion constituting the argyrodite crystal.

### (Polyanionic Structure)

The anion contained in the sulfide solid electrolyte according to the present embodiment include the oxide anion having the P-0 bond in which P and 0 are bonded. At least a part of the oxide anion having the P-0 bond is different from the anion constituting the argyrodite crystal and constitutes a polyanionic structure.

Since the sulfide solid electrolyte includes the polyanionic structure different from the anion constituting the argyrodite crystal, the sulfide solid electrolyte exerts strong electrostatic attraction with the lithium cations as described above, whereby the heat resistance of the argyrodite crystal is improved.

The polyanionic structure is not particularly limited as long as the polyanionic structure is the oxide anion having the P-0 bond, and examples thereof include PO₄³⁻, POS₃³⁻, PO₂S₂³⁻, and PO₃S³⁻. Among these, the polyanionic structure tends to include at least PO₄³⁻ and PO₂S₂³⁻, with PO₂S₂³⁻ being the most abundant.

Among these, using a content represented by mol%, a ratio of a content expressed as {[PO₄³⁻]/([PO₄³⁻] + [POS₃³⁻] + [PO₂S₂³⁻] + [PO₃S³⁻])} is preferably 0.1 or more, and more preferably 0.2 or more, from the viewpoint of increasing the proportion of the P-0 bonds. Further, when the sulfide solid electrolyte is applied to the lithium-ion secondary battery, the ratio of the content is preferably 0.5 or less and more preferably 0.4 or less, from the viewpoint of preventing the polyanionic structure from becoming too hard and resulting in poor battery performance.

The presence of the polyanionic structure can be found by a ³¹P-NMR (nuclear magnetic resonance) analysis or a Raman spectroscopy for all the total amount, and by a powder X-ray diffraction (XRD) measurement for an amount in a crystal state.

Specifically, the presence of the P-0 bond can be found by observing a peak around 960 cm⁻¹ in the Raman spectroscopy. It can be found from the matter that no peak is observed in the XRD measurement that these are not anions constituting the argyrodite crystal. Further, even when the peak is observed in the XRD measurement, a weight proportion of oxygen (0) is estimated from the pattern, and the weight proportion is small compared to the total content of 0 contained in the entire sulfide solid electrolyte, thereby founding that the polyanionic structure different from the anion constituting the crystal is included.

In the ³¹P-NMR analysis, since peak positions differ for each of PO₄³⁻, POS₃³⁻, PO₂S₂³⁻, and PO₃S³⁻, a content ratio of polyanionic structures can be determined from an integrated intensity ratio.

Specifically, in the ³¹P-NMR analysis, a peak is detected in a range of 0 ppm to 20 ppm for PO₄³⁻, a peak is detected in a range of 75 ppm to 80 ppm for POS₃³⁻, a peak is detected in a range of 60 ppm to 75 ppm for PO₂S₂³⁻, and a peak is detected in a range of 30 ppm to 50 ppm for PO₃S³⁻.

### (Entire Composition)

Regarding the sulfide solid electrolyte, when the entire composition including the crystal phase including the argyrodite crystal and the anion is LiₐMS_{b}Ha_{c}Oₓ, the relationships of 4 < a < 7, 3 < b < 6, 0 < c < 2, 0 < x, and 3 < (b + c) < {6 - (x/2)} are satisfied.

The entire composition is a composition in which the crystal phase including the argyrodite crystal and the oxide anion having the M-0 bond containing a polyanionic structure of PO₄³⁻ different from the anion constituting the crystal are added. Further, when another crystal phase including another crystal other than the argyrodite crystal and another anion are contained, the crystal phase and the anion are also considered.

A content of each element and a total thereof are determined by a composition analysis using ICP emission spectrometry, atomic absorption, ion chromatography, or the like.

When the sulfide solid electrolyte includes the other crystal phase including the crystal other than the argyrodite crystal, there is a concern that performance such as lithium ion conductivity and water resistance decreases. Therefore, it is preferable that the crystal phase including the argyrodite crystal be a main component in all components constituting the sulfide solid electrolyte. Here, the main component means a component having the highest content expressed in a mass ratio among all the components constituting the sulfide solid electrolyte, and the content thereof is preferably more than 50 mass%, and more preferably 51 mass% or more.

A content of the crystal phase including the argyrodite crystal in the sulfide solid electrolyte is preferably 65 mass% or more, more preferably 80 mass% or more, still more preferably 85 mass% or more, and particularly preferably 90 mass% or more, from the viewpoint of achieving high lithium ion conductivity. From the viewpoint of obtaining an effect of containing the oxide anion having the M-O bond, the content of the crystal phase including the argyrodite crystal is preferably 99 mass% or less, more preferably 97 mass% or less, still more preferably 95 mass% or less, and yet still more preferably 90 mass% or less.

A content ratio of each crystal phase in the sulfide solid electrolyte can be calculated by adding an internal standard substance, measuring the internal standard substance by XRD or neutral-beam scattering, and then comparing peak intensity with the internal standard substance.

A proportion of the crystal phase including the argyrodite crystal in the crystal phase constituting the sulfide solid electrolyte is more preferably 70 mass% or more, still more preferably 85 mass% or more, and 100 mass%, that is, the crystal phase may be only the crystal phase including the argyrodite crystal.

A total content of the crystal phase including the argyrodite crystal and the oxide anion having the M-0 bond in the sulfide solid electrolyte is preferably 80 mass% or more, more preferably 85 mass% or more, and still more preferably 90 mass% or more, from the viewpoint of further obtaining the effect of the present invention. An upper limit of the total content is not particularly limited, and may be 100 mass%, that is, only the crystal phase including the argyrodite crystal and the oxide anion may be included. On the other hand, when the sulfide solid electrolyte is produced, the sulfide solid electrolyte may contain other components such as impurity crystals and an amorphous phase, and the total content may be, for example, 99.5 mass% or less, 99 mass% or less, 97 mass% or less, or 95 mass% or less.

The crystal phase including the argyrodite crystal in this specification may contain two or more types of argyrodite crystals. Further, a content ratio of each crystal phase with respect to a total of the crystal phases constituting the sulfide solid electrolyte can be calculated by adding an internal standard substance, measuring the internal standard substance by the XRD or the neutral-beam scattering, and then comparing peak intensity with the internal standard substance.

Among the oxide anions having the P-0 bond in the sulfide solid electrolyte, a content of the polyanionic structure, which is the oxide anion that has the P-0 bond and is different from the anion constituting the crystal to be the crystal phase, is preferably 1 mass% or more, more preferably 3 mass% or more, and still more preferably 5 mass% or more, from the viewpoint of exhibiting an effect of heat resistance. From the viewpoint of hardly precipitating impurities, the content of the polyanionic structure is preferably 20 mass% or less, more preferably 15 mass% or less, and still more preferably 10 mass% or less.

The content of the polyanionic structure is determined by quantifying a total amount of the M-0 bonds by the NMR analysis such as ³¹P-NMR or ²⁹Si-NMR, separately quantifying the M-0 bonds constituting the crystal by the XRD measurement or the neutral-beam scattering measurement, and calculating a difference between the two.

When the entire composition of the sulfide solid electrolyte is LiₐMS_{b}Ha_{c}Oₓ, a total amount of the M, which serves as a reference proportional to an amount of each of Li, S, the Ha, and 0, is mainly derived from the crystal phase such as the argyrodite crystal and the oxide anion having the M-0 bond different from the anion constituting the crystal.

In the entire composition of the sulfide solid electrolyte, a ratio of the amount of Li to the total amount of the M is represented by a, and Li is mainly derived from the argyrodite crystal.

A value of a is more than 4, and from the viewpoint of not deviating too much from an argyrodite composition, the value is preferably 4.3 or more, more preferably 4.7 or more, and still more preferably 5.0 or more. Further, from the viewpoint of reducing the precipitation of the impurities, the value of a is less than 7, preferably 6.5 or less, more preferably 6.0 or less, and still more preferably 5.5 or less.

The entire composition of the sulfide solid electrolyte is determined by quantitation using ICP emission spectrometry and an oxygen nitrogen hydrogen analysis.

In the entire composition of the sulfide solid electrolyte, a ratio of the amount of S to the total amount of the M is represented by b, and S is mainly derived from the argyrodite crystal.

A value of b is more than 3, and from the viewpoint of not deviating too much from the argyrodite composition, the value is preferably 3.3 or more, more preferably 3.7 or more, and still more preferably 4.0 or more. Further, from the viewpoint of reducing the precipitation of the impurities, the value of b is less than 6, preferably 5.0 or less, more preferably 4.7 or less, and still more preferably 4.3 or less.

In the entire composition of the sulfide solid electrolyte, a ratio of a total amount of the Ha to the total amount of the M is represented by c, and the Ha is mainly derived from the argyrodite crystal.

A value of c may be more than 0, and from the viewpoint of not deviating too much from the argyrodite composition, the value is preferably 0.8 or more, more preferably 1.0 or more, and still more preferably 1.2 or more. Further, from the viewpoint of reducing the precipitation of the impurities, the value of c is less than 2, preferably 1.8 or less, more preferably 1.6 or less, and still more preferably 1.4 or less.

In the entire composition of the sulfide solid electrolyte, a ratio of an amount of O to the total amount of the M is represented by x, O is mainly derived from the oxide anion having the M-0 bond including the P-0 bond, and when a part of the anion constituting the crystal are substituted with the oxide anion, O is also derived from the substituted oxide anion.

The value of x may be more than 0, and is preferably 0.03 or more, more preferably 0.2 or more, and still more preferably 0.4 or more from the viewpoint of increasing an amount of the P-0 bonds. Further, the value of x is less than 6, and is preferably 3.0 or less and more preferably less than 1, from the viewpoint of easily precipitating the impurities when an amount of the added compound to be the oxygen source is large.

In the entire composition of the sulfide solid electrolyte, a ratio (b + c) of a total amount of S and the Ha to the total amount of the M and a value represented by {6 - (x/2)} using the ratio of the amount of O to the total amount of the M satisfy a relationship of (b + c) < {6 - (x/2)}. This {6 - (x/2)} is due to the matter that, as mentioned above, a content of PO₂S₂³⁻tends to be the highest among the polyanionic structures having the P-0 bond.

Although a value represented by (b + c) is more than 3, it is preferable that {3.5 - (x/2)} < (b + c) be satisfied in a range of 0 < x <1. This is a relational expression defined from the viewpoint of preventing a composition of the argyrodite crystal itself from deviating due to the excessive M content in the entire composition. The value represented by (b + c) is more preferably 3.5 or more, and still more preferably 4.5 or more.

The value represented by (b + c) is less than {6 - (x/2)}, and a difference between {6 - (x/2)} and (b + c) is preferably 0.1 or more, more preferably 0.3 or more, and still more preferably 0.5 or more, from the viewpoint of reducing a content of the impurity crystals and achieving the high lithium ion conductivity. An upper limit of the difference is less than 3.

M in the entire composition of the sulfide solid electrolyte is at least one element selected from the group consisting of the metal elements and the metalloid elements in groups 2 to 15 of the periodic table, the at least one element including at least P. P is mainly derived from the argyrodite crystal and the oxide anion having the P-0 bond. Further, when the sulfide solid electrolyte contains another crystal phase and contains P, P is also derived from the other crystal phase.

Examples of a case in which the M includes at least one element selected from the group consisting of the metal elements and the metalloid elements in groups 2 to 15 of the periodic table other than P include a case in which M is derived from another crystal phase or another oxide anion. For example, when a crystal phase including the LGPS crystal is included as the other crystal phase, Ge is included in the M. Furthermore, for example, when SiO₄⁴⁻, AlO₄⁴⁻, BO₃⁴⁻ and the like are included as the other oxide anion, the M also includes Si, Al, B, and the like.

The M may include only P, but when the M also contains elements other than P, it is preferable to contain the oxide anion having the M-O bond other than the P-0 bond from the viewpoint of the heat resistance. It is more preferable that such an M include, for example, at least one element selected from the group consisting of Si, Al, Zr, and B.

The oxide anion having the M-O bond other than the P-0 bond is more preferably an oxide anion having a QO structure from the viewpoint of the heat resistance.

The QO structure is a structure in which all oxygen atoms bonded to the M that is a central cation are non-crosslinked oxygen atoms. For example, in the case where the M represents Si, it means that an oxide of SiO₂ exists as silicate ions, that is, oxide anions referred to as SiO₄⁴⁻.

The oxide anion having the QO structure may be present as an anion constituting the crystal, or may be present as a polyanionic structure different from the anion constituting the crystal.

The anion constituting the crystal can also be referred to as a state of being fixed in a crystal structure. Specifically, a case in which the oxide anion having the QO structure serves as a crystal nucleus to form the argyrodite crystal, a case in which the oxide anion having the QO structure is incorporated in an argyrodite crystal structure, and both the cases are referred to. This fixation of the oxide anion having the QO structure is a unique phenomenon observed when the crystal is the argyrodite crystal containing at least three elements of Li, S, and Ha.

On the other hand, in the case of Li-P-S ternary crystals that contains the three elements of Li, P and S, but does not contain the Ha, such as, Li₇P₃S₁₁ and LGPS crystals such as Li₁₀GeP₂S₁₂, the oxide anion having the QO structure is not well fixed in the crystal structure.

It is not clear why the presence of the oxide anion having the QO structure allows the argyrodite crystal to exist stably without decomposing even at a high temperature. However, it is considered that the oxide anion having the QO structure becomes the crystal nucleus to form an argyrodite crystal phase, which has an effect of stabilizing crystallization or an effect of incorporating the oxide anion having the QO structure into the argyrodite crystal structure and stabilizing the oxide anion. Further, in a case in which the oxide anion having the QO structure serving as the crystal nucleus and the oxide anion having the QO structure incorporated in the crystal structure are co-present, it is presumed that the argyrodite crystal can be more stably present due to a composite factor of the above effect.

Even if the element M having weak M-0 bonding strength is selected, the above-mentioned effect as the oxide anion having the QO structure can be obtained, but there is a possibility that oxygen may be lost or volatilized during a heating process, or that oxygen atoms may be incorporated into unexpected anion sites in the crystal. Therefore, it is preferable to contain an element M having M-0 bonding strength of 400 kJ/mol or more, more preferably an element M having M-0 bonding strength of 450 kJ/mol or more, and still more preferably an element M having M-0 bonding strength of 500 kJ/mol or more.

An upper limit of the M-0 bonding strength is particularly limited, but is generally 1,000 kJ/mol or less.

For the above reason, the M preferably contains at least one element selected from the group consisting of the metal elements and the metalloid elements in groups 2 to 15 of the periodic table, and more preferably contains at least one element selected from the group consisting of Al, B, Ge, La, Ta, Nb, Ti, Si, Sn, V, Y, and Zr.

In this specification, the M-0 bonding strength refers to bond dissociation energy, and each bond has a unique value for the bond dissociation energy. A calculation method thereof is defined as a standard enthalpy change (ΔHf298) in a dissociation reaction of MO → M + 0 as ΔHf298 = ΔHf298(M) + ΔHf298(O) - ΔHf298(MO).

Such an oxide anion having the QO structure may be actively added when producing the sulfide solid electrolyte. Examples of the active addition method include a method for adding SiO₂ as a raw material when the M is Si.

Further, the presence of the oxide anion having the QO structure can be observed by the NMR analysis. For example, in the case of having a Si-0 bond, formation of a bond of Si-O-P can be observed by a ²⁹Si-NMR analysis.

Among the total content of 0 contained in the sulfide solid electrolyte, 60% or more of O is bonded to the M. Accordingly, excellent heat resistance can be achieved. A proportion of O bonded to the M in the total content of O is preferably 70% or more, more preferably 80% or more, and still more preferably 90% or more, and the higher the proportion, the better. Therefore, an upper limit thereof may be 100%.

The proportion of O bonded to the M is determined from results of the oxygen nitrogen hydrogen analysis and the NMR analysis. Specifically, the total content of O contained in the sulfide solid electrolyte is quantitatively determined by the oxygen nitrogen hydrogen analysis. In the oxygen nitrogen hydrogen analysis, a measuring device can be selected according to the content of O. For example, when the oxygen content is 0.05 ppm to 5.0% (weight proportion), ONH 836 manufactured by LECO Corporation is preferable, and when the oxygen content is 5.0% or more, energy dispersive X-ray analysis or the like is preferable.

On the other hand, the M-0 bond is quantitatively determined by the NMR analysis using the M as a measurement nucleus. In the NMR analysis, for example, when the M is only P, the ³¹P-NMR analysis is performed. When the M contains Si in addition to P, the ²⁹Si-NMR analysis is also performed in addition to the ³¹P-NMR analysis.

Further, the proportion of the M-O bond is calculated from results of the oxygen nitrogen hydrogen analysis and the NMR analysis as described above.

When the total content of 0 contained in the sulfide solid electrolyte is represented by [O]_{T} and a total content of 0 constituting a crystal structure of the crystal phase contained in the sulfide solid electrolyte is represented by [O]_{A}, a proportion of an amount of oxygen not constituting the crystal structure is represented by {([O]_{T} - [O]_{A})/[O]_{T}}. The oxygen not constituting the crystal structure is, for example, the polyanionic structure different from the anion constituting the argyrodite crystal, and does not correspond to 0 contained in the anion constituting the argyrodite crystal or 0 constituting the impurity crystals such as Li₃PO₄.

The value represented by {([O]_{T} - [O]_{A})/[O]_{T}} is preferably more than 0.5, more preferably 0.6 or more, and still more preferably 0.7 or more from the viewpoint of the heat resistance.

Although the reason is not clear, it is considered that the cause of the thermal decomposition of the argyrodite crystal structure is thought to be due to desorption of sulfur from the argyrodite crystal structure. On the other hand, when oxygen that does not constitute the crystal, that is, the polyanionic structure such as the oxide anion having the P-0 bond, is present at a grain boundary of the argyrodite crystal, the desorption of sulfur can be prevented, and as a result, the heat resistance is improved. On the other hand, when the amount of oxygen which does not constitute such a crystal structure is small, in addition to 0 contained in the anion constituting the argyrodite crystal, there are relatively many impurity crystals such as Li₃PO₄. It is considered that when the impurity crystals are present near the argyrodite crystal and an interface between the crystals is formed, the above-mentioned desorption of sulfur may not be prevented.

Further, in addition to the viewpoint of the above-described heat resistance, the presence of oxygen, which does not constitute the crystal, at the grain boundary makes the interface between the crystals harder than that in the case in which no oxygen is present, so that during pulverization, such an interface is used as a starting point for successful cracking, making the crystal easier to pulverize.

An upper limit of the value represented by {([O]_{T} - [O]_{A})/[O]_{T}} is not particularly limited, but is usually less than 1, may be 0.95 or less, and may be 0.90 or less.

The impurity crystals contained in the sulfide solid electrolyte lead to the decrease in lithium ion conductivity, which may also lead to the decrease in heat resistance as described above. Therefore, a total content of lithium halide (LiHa), lithium phosphate (Li₃PO₄), and lithium thiophosphate (Li₃PS₄) contained in the sulfide solid electrolyte is preferably 3.0 mass% or less, more preferably 1.5 mass% or less, and still more preferably 0.6 mass% or less.

### (Crystal Phase)

The crystal phase in the sulfide solid electrolyte contains the argyrodite crystal containing Li, P, S, and Ha. The Ha is at least one element selected from the group consisting of F, Cl, Br, and I. The argyrodite crystal may contain only one kind of crystal having the same composition or two or more kinds of crystals having different compositions. Further, a crystal having a crystal structure other than an argyrodite type may be included.

The crystal structure can be analyzed from a pattern obtained by XRD measurement. In the case in which peaks are present at positions of 2θ = 15.7 ± 0.5° and 30.2 ± 0.5° in the XRD pattern, it can be said that the argyrodite crystal is contained. In addition to the above peaks, the XRD pattern preferably has a peak at a position of 2θ = 18.0 ± 0.5°, and more preferably has a peak also at a position of 2θ = 25.7 ± 0.5°.

For a ratio of contents (at%) of the elements constituting the argyrodite crystal, that is, a ratio of contents of the elements contained in the argyrodite crystal, when the composition is represented by Li_{α}PS_{β}Ha_{γ}, relationships of 5 < α < 7, 4 < β < 6, and 0 < γ < 2 are preferably satisfied, since the argyrodite crystal is likely to be formed. Such an element ratio more preferably satisfies relationships of 5.1 < α < 6.3, 4 < β < 5.3, and 0.7 < γ < 1.9, and still more preferably satisfies relationships of 5.2 < α < 6.2, 4.1 < β < 5.2, and 0.8 < γ < 1.8.

That is, the symbol α is preferably more than 5, more preferably more than 5.1, and still more preferably more than 5.2, and is preferably less than 7, more preferably less than 6.3, and still more preferably less than 6.2.

The symbol β is preferably more than 4, more preferably more than 4.1, and preferably less than 6, still more preferably less than 5.3, and still more preferably less than 5.2.

The symbol γ is preferably more than 0, more preferably more than 0.7, and still more preferably more than 0.8, and is preferably less than 2, more preferably less than 1.9, and still more preferably less than 1.8.

A preferable crystal structure of the argyrodite crystal is a cubic crystal such as F-43m, and a hexagonal crystal, a tetragonal crystal, an orthorhombic crystal, a monoclinic crystal, or the like having reduced symmetry or a triclinic crystal having further reduced symmetry may exist.

A halogen element represented by the Ha is at least one selected from the group consisting of F, Cl, Br, and 1, and in view that the crystal is likely to be the argyrodite crystal, at least one of Cl and Br is preferably contained, Cl is more preferably contained, and elemental Cl or a mixture of Cl and Br is still more preferably contained.

When the Ha contains Cl and Br, a content ratio represented by (cl/c2) is preferably 0.1 or more, more preferably 0.3 or more, and still more preferably 0.5 or more, in which cl (at%) is the content of Cl in the argyrodite crystal and c2 (at%) is the content of Br in the argyrodite crystal. Further, (cl/c2) is preferably 10 or less, more preferably 3 or less, and still more preferably 1.6 or less. When the (cl/c2) satisfies the above range, an interaction between lithium ions and halide ions is weakened, and the lithium ion conductivity of the sulfide solid electrolyte is likely to be satisfactory. This is considered to be due to the influence of a mixed anion effect, which weakens the interaction between cations and anions by mixing bromide ions having an ionic radius larger than that of chloride ions. When the (cl/c2) satisfies the above range, cycle characteristics of the lithium-ion secondary battery are likely to be improved.

For a ratio of contents (at%) of the elements constituting the argyrodite crystal in the case in which the Ha contains Cl and Br, when the composition is represented by Li_{α}PS_{β}Cl_{γ1}Br_{γ2}, the symbol γ1 is preferably 0.1 or more, more preferably 0.3 or more, and still more preferably 0.5 or more, and is preferably 1.5 or less, more preferably 1.4 or less, and still more preferably 1.3 or less. The symbol γ2 is preferably 0.1 or more, more preferably 0.3 or more, and still more preferably 0.5 or more, and is preferably 1.9 or less, more preferably 1.6 or less, and still more preferably 1.4 or less. When γ1 and γ2 each satisfy the above ranges, a stable argyrodite crystal can be obtained while an abundance proportion of the halide ions in the crystal is optimized and the interaction between the anions and the lithium ions in the crystal is reduced. Accordingly, the lithium ion conductivity of the sulfide solid electrolyte is likely to be satisfactory. Further, when γ1 and γ2 satisfy the above ranges, the cycle characteristics of the lithium-ion secondary battery are likely to be improved.

Here, α, β, and (γ1 + γ2) preferably satisfy the same relationships as α, β, and γ described above, respectively.

The anion constituting the argyrodite crystal is an anion that is fixed in the crystal structure. Specifically, although the anion varies depending on the composition of the argyrodite crystal, examples thereof include PS₄³⁻, P₂S₆⁴⁻, P₂S₇^{4-,} and the like.

Further, a part of the anion sites may be substituted with the oxide anion. The argyrodite crystal in this case also includes 0 in addition to Li, P, S, and the Ha. Examples of the substituted oxide anion include SiO₄⁴⁻, PO₄³⁻, AlO₄³⁻, and the like. In accordance with the composition of the oxide anion, the argyrodite crystal further contains an element represented by the M such as Si, Al, Zr, and B.

A crystallite size of the crystal constituting the crystal phase is preferably small from the viewpoint of obtaining good lithium ion conductivity when the sulfide solid electrolyte is used to form a battery as a sulfide solid electrolyte layer. Specifically, the crystallite size is preferably 1,000 nm or less, more preferably 500 nm or less, and still more preferably 250 nm or less. A lower limit of the crystallite size is not particularly limited, and the crystallite size is generally 5 nm or more.

The crystallite size can be calculated by using a half-width of the peak of the XRD pattern and a Scherrer equation.

### (Lithium-ion Secondary Battery)

The sulfide solid electrolyte has high lithium ion conductivity and excellent heat resistance when used in the lithium-ion secondary battery.

When the sulfide solid electrolyte is formed into a pressure-molded body at pressure of 380 MPa, the lithium ion conductivity at 25°C before the heat treatment is preferably 6.0 mS/cm or more, more preferably 7.0 mS/cm or more, and still more preferably 8.0 mS/cm or more, and the higher the lithium ion conductivity, the better. The lithium ion conductivity is determined from a Nyquist plot obtained by AC impedance measurement.

As an index of the heat resistance, determination is made based on a degree of the decrease in lithium ion conductivity after the heat treatment at a high temperature. If a proportion of the lithium ion conductivity after the heat treatment at 475°C for 30 minutes to the lithium ion conductivity before the heat treatment is 50% or more, it can be said that the heat resistance is good, and such a proportion is preferably 65% or more, more preferably 70% or more, still more preferably 80% or more, yet still more preferably 85% or more, particularly preferably 90% or more, and the higher the proportion, the better.

A thermal decomposition temperature may be used as an index for the heat resistance of the sulfide solid electrolyte. The thermal decomposition temperature of the sulfide solid electrolyte is preferably 500°C or higher, more preferably 600°C or higher, and still more preferably 650°C or higher. Further, an upper limit thereof is not particularly limited, and is generally 900°C or lower.

The thermal decomposition temperature of the sulfide solid electrolyte can be determined by an XRD pattern of a sample after the heat treatment. Specifically, the heat treatment is performed at various temperatures, and the presence or absence of the impurity crystal is checked and the impurity crystal is quantified by the XRD pattern and an analysis after the heat treatment. A temperature at which the crystal contains 10 mass% or more of the impurity crystal other than the argyrodite crystal such as Li₃PS₄, LiHa, and Li₂S is defined as the thermal decomposition temperature of the sulfide solid electrolyte.

In the case in which the sulfide solid electrolyte is used for the lithium-ion secondary battery, the sulfide solid electrolyte may form a solid electrolyte layer together with other components such as a binder as necessary. As the binder or other components, known substances according to the related art are used.

A content of the sulfide solid electrolyte with respect to the entire solid electrolyte layer is preferably 80 mass% or more, and more preferably 90 mass% or more.

As a method for forming the solid electrolyte layer, a known method according to the related art is also used. As an example of wet molding, the solid electrolyte layer can be formed by dispersing or dissolving the components constituting the solid electrolyte layer in a solvent to form a slurry, applying the slurry in the form of a layer, that is, a sheet, drying the slurry, and freely pressing the slurry. If necessary, the binder may be removed by heating. A thickness of the solid electrolyte layer can be easily adjusted by adjusting a coating amount of the slurry.

In addition, instead of the wet molding, the solid electrolyte layer may be formed by press-molding a sulfide solid electrolyte powder or the like on a surface of a positive electrode, a negative electrode, or the like by a dry method. Alternatively, the solid electrolyte layer may be formed on another base material and transferred onto the surface of the positive electrode, the negative electrode, or the like.

The sulfide solid electrolyte may be mixed with a positive electrode active material or a negative electrode active material to be used as a positive electrode layer or a negative electrode layer. As the positive electrode active material or negative electrode active material used for the positive electrode layer or negative electrode layer, a current collector, a binder, a conductive aid, and the like, known materials according to the related art are used.

A lithium-ion secondary battery containing the sulfide solid electrolyte includes the solid electrolyte layer, the positive electrode layer, and the negative electrode layer.

As a material of an outer casing of the lithium-ion secondary battery, known materials according to the related art may also be used. As a shape of the lithium-ion secondary battery, known shapes according to the related art may be used, and examples of the shape of the lithium-ion secondary battery include a coin shape, a sheet shape (film shape), a folded shape, a wound cylindrical shape with a bottom, and a button shape. The shape thereof can be appropriately selected according to the application.

### <Method for Producing Sulfide Solid Electrolyte>

A method for producing the sulfide solid electrolyte according to the present embodiment is not particularly limited as long as the solid electrolyte described in the <Sulfide Solid Electrolyte> is obtained. That is, it is sufficient to obtain the sulfide solid electrolyte that includes the crystal phase containing the argyrodite crystal and the oxide anion having the P-0 bond containing the polyanionic structure different from the anion constituting the argyrodite crystal, and that satisfies the relationship of 3 < (b + c) < {6 - (x/2)} when the entire composition of the sulfide solid electrolyte is LiₐMS_{b}Ha_{c}Oₓ and having 60% or more of the total content of 0 which is bonded to the M.

In order to introduce the oxide anion having the P-0 bond containing the polyanionic structure different from the anion constituting the argyrodite crystal, the compound to be the oxygen source is added to the raw material. In the related art, Li₂O and LiOH have been used as the compound to be the oxygen source, but these have weak oxidizing power and are difficult to form the M-O bond including the P-0 bond.

On the other hand, the present inventors have found that in order to efficiently form the P-O bond from the viewpoint of the heat resistance, specific compounds containing lithium, such as Li₂CO₃, Li₂SO₄, and Li₃PO₄, are preferable as the compound to be the oxygen source. The reason for this is that although a detailed mechanism is unknown, Li₂O and LiOH have strong oxidizing power and therefore tend to form crystals such as Li₃PO₄, while 0 contained as carbonates, sulfates, and phosphates has weak oxidizing power. Therefore, it is considered that although it is not possible to obtain a long range order like a crystal structure, an amorphous polyanionic structure that is aligned to some extent is easily formed.

In the production method according to the present embodiment, by using at least one selected from the group consisting of Li₂CO₃, Li₂SO₄, and Li₃PO₄ as the compound to be the oxygen source, appropriate oxidizing power is obtained, and the M-0 bond containing the P-0 bond is easily formed. As a result, the oxide anion having the P-0 bond including the polyanionic structure is introduced, and 60% or more of the total content of 0 is bonded to the M to form the M-0 bond.

In addition to the above, when the compound to be the oxygen source is introduced, a ratio of P and Ha for obtaining the argyrodite crystal shifts due to the formation of the P-0 bond. Therefore, in addition to the argyrodite crystal, the impurity crystals such as lithium halide, lithium phosphate, and lithium thiophosphate are precipitated, which is a cause of the decrease in lithium ion conductivity.

On the other hand, in the production method according to the present embodiment, by making a content of P in the raw material excessive compared to the related art, it is possible to prevent the deviation in the composition for obtaining the argyrodite crystal and to prevent the precipitation of the impurity crystals.

In this way, by using at least one selected from the group consisting of Li₂CO₃, Li₂SO₄, and Li₃PO₄ as the compound to be the oxygen source, and by making the content of P in the raw material excessive compared to the related art, the sulfide solid electrolyte according to the present embodiment is obtained. In addition to these, it is preferable to produce the sulfide solid electrolyte using a melt extraction method rather than a solid phase reaction widely used in the related art.

A specific production method A preferably includes the following steps A1 to A3.
(Step Al): A step of mixing a raw material containing Li, P, S, and Ha and a compound to be an oxygen source to obtain a raw material mixture;
(Step A2) a step of heating the obtained raw material mixture to obtain a molten material; and
(step A3) a step of cooling the obtained molten material to obtain an argyrodite crystal and a polyanionic structure of an oxide anion that has a P-0 bond and is different from an anion constituting the argyrodite crystal.

Here, the Ha is at least one element selected from the group consisting of F, Cl, Br, and I.

Further, the compound to be the oxygen source in step A1 includes at least one selected from the group consisting of Li₂CO₃, Li₂SO₄, and Li₃PO₄. Furthermore, in the raw material mixture obtained in step Al, the content of P is in a molar ratio of 0.5 to 0.8 with respect to a content of the Ha.

Each step of the production method A will be described in detail.

In step Al, the raw material mixture is obtained by mixing the raw material containing Li, P, S, and the Ha and the compound to be the oxygen source.

As the raw material, a known material according to the related art can be used.

Examples of a compound containing Li include lithium compounds such as lithium sulfide (Li₂S), lithium oxide (Li₂O), lithium carbonate (Li₂CO₃), lithium hydroxide (LiOH), and lithium sulfate (Li₂SO₄), and elemental lithium metal.

Examples of a compound containing P include phosphorus sulfides such as phosphorus trisulfide (P₂S₃) and phosphorus pentasulfide (P₂S₅), phosphorus compounds such as lithium phosphate (LiP03, Li₄P₂O₇, and Li₃PO₄) and sodium phosphate (NaP03, Na₄P₂O₇, and Na₃PO₄), and elemental phosphorus.

Examples of a compound containing S include the lithium sulfide (Li₂S), the phosphorus sulfides (P₂S₃ and P₂S₅), hydrogen sulfide (H₂S), and Li₂SO₄, and elemental sulfur may also be used.

Among compounds containing the Ha, examples of a compound containing Cl (chlorine) include lithium chloride (LiCI), phosphorus trichloride (PCl₃), phosphorus pentachloride (PCIs), diphosphorus tetrachloride (P₂Cl₄), phosphoryl chloride (POCl₃), sulfur dichloride (SCl₂), disulfur dichloride (S₂Cl₂), sodium chloride (NaCl), and boron trichloride (BCl₃).

Among the compound containing the Ha, examples of a compound containing Br (bromine) include lithium bromide (LiBr), phosphorus tribromide (PBr₃), phosphoryl chloride (POBr₃), sulphur monobromide (S₂Br₂), sodium bromide (NaBr), and boron tribromide (BBr₃).

Among the above, when it is desired to obtain the argyrodite crystal, a combination of lithium sulfide, a phosphorus sulfide, and at least one of lithium chloride and lithium bromide is preferable.

The compound to be the oxygen source includes at least one selected from the group consisting of Li₂CO₃, Li₂SO₄, and Li₃PO₄.

Li₂CO₃, Li₂SO₄, and Li₃PO₄ are also the compounds containing Li among the raw materials, but other compounds containing Li such as those shown above may also be used in combination as the compounds containing Li. Similarly, when Li₃PO₄ is used as the compound to be the oxygen source, Li₃PO₄ is also the compound containing P among the raw materials, but other compounds containing P such as those shown above may also be used in combination as the compound containing P. When Li₂SO₄ is used as the compound to be the oxygen source, Li₂SO₄ is also the compound containing S among the raw materials, but other compounds containing S such as those shown above may also be used in combination as the compound containing S.

From the viewpoint of forming the oxide anion that has the P-0 bond containing the polyanionic structure of PO₄³⁻ and that is different from the anion constituting the argyrodite crystal, the compound to be the oxygen source is preferably added such that a total mass proportion of oxygen in the entire composition is 1.0% or more, more preferably 2.0% or more, and still more preferably 3.0% or more. Further, from the viewpoint of preventing the precipitation of the impurity crystal, a total addition amount of the compound to be the oxygen source is preferably 10% or less, more preferably 8.0% or less, and still more preferably 6.0% or less.

In order to compensate for P used in the formation of the oxide anion having the P-0 bond, the content of P in the raw material mixture is made excessive. Further, from the viewpoint of preventing the decrease in lithium ion conductivity due to the impurity crystal of LiHa (lithium halide), the content of P in the raw material mixture is made excessive. Specifically, the molar ratio of the content of P to the content of the Ha is 0.5 or more, preferably 0.6 or more, and more preferably 0.65 or more. From the viewpoint of preventing the decrease in lithium ion conductivity due to insufficient Ha, the molar ratio of the content of P to the content of the Ha is preferably 0.8 or less, and more preferably 0.75 or less.

These raw materials are very unstable in the air, react with water and decomposed, and may generate hydrogen sulfide gas or be oxidized. Therefore, it is preferable to mix the raw materials and the compound to be the oxygen source in an inert atmosphere.

For mixing of the raw materials, for example, mixing using a medium, such as a planetary ball mill, and medium-less mixing such as a pin mill, a powder stirrer, and air flow mixing can be adopted. The raw materials may be made amorphous by mixing before heating.

In step A2, the obtained raw material mixture is heated to obtain the molten material.

As conditions for heating and melting, a known condition according to the related art can be applied.

For example, in order to increase fluidity of the molten solution, a heating temperature is preferably 600°C or higher, more preferably 630°C or higher, and still more preferably 650°C or higher. In addition, a heating and melting temperature is preferably 900°C or lower, more preferably 850°C or lower, and still more preferably 800°C or lower, from the viewpoint of preventing deterioration or decomposition due to heating of the components in the molten solution.

A heating and melting time is preferably 0.1 hours or more, more preferably 0.5 hours or more, still more preferably 0.7 hours or more, and yet still more preferably 1 hour or more in order to make the molten material sufficiently uniform. In addition, from the viewpoint of preventing the deterioration or the decomposition due to the heating of the components in the molten solution, the heating and melting time is preferably 10 hours or less, more preferably 9.5 hours or less, and still more preferably 9 hours or less.

In step A3, the obtained molten material is cooled to obtain the argyrodite crystal, and the polyanionic structure of the oxide anion that has the P-0 bond and is different from the anion constituting the argyrodite crystal.

The crystal state depends on cooling conditions. Specifically, a state of the crystal can be adjusted by changing the cooling conditions such as a cooling rate and pressure during cooling.

The cooling rate is preferably 0.01°C/sec or more, more preferably 0.05°C/sec or more, and still more preferably 0.1°C/sec or more under normal pressure, from the viewpoint of maintaining a composition obtained in step A2 of the heating and melting. An upper limit of the cooling rate is not particularly limited, but may be 1,000,000°C/sec or less. In addition, a heat treatment may be further performed after the cooling to perform a stabilization treatment.

In the method for producing the sulfide solid electrolyte powder according to the present embodiment, in addition to steps A1 to A3, another step may be further included as long as effects of the present invention are not impaired.

### EXAMPLES

Hereinafter, the present invention will be described in detail with reference to Examples, but the present invention is not limited thereto.

Example 1 to Example 8 are inventive examples, and Example 9 to Example 12 are comparative examples.

### (Example 1)

Under a dry nitrogen atmosphere, a lithium sulfide powder (manufactured by Sigma Corporation, purity: 99.98%), a phosphorus pentasulfide powder (manufactured by Sigma Corporation, purity: 99%), a lithium chloride powder (manufactured by Sigma Corporation, purity: 99.99%), and a lithium carbonate powder (manufactured by Sigma Corporation, purity: 99.99%) were weighed such that an entire composition of the sulfide solid electrolyte and a composition ratio of the argyrodite crystal were ratios described in an "entire composition (at ratio)" section and a "crystal phase (argyrodite) composition ratio" section of Table 1, respectively, and mixed at 400 rpm for 4 hours using a planetary ball mill in the same atmosphere to obtain a raw material mixture. In the raw material mixture, a molar ratio of the content of P with respect to the content of the Ha was set to 0.67 (step A1).

The obtained raw material mixture was vacuum-sealed in a carbon-coated quartz tube and heated at 750°C for 60 minutes to obtain a molten material (step A2). Next, the obtained molten material was cooled to room temperature (25°C) at 1°C/sec to obtain a sulfide solid electrolyte (step A3).

### (Examples 2 to 8 and Example 10)

Sulfide solid electrolytes were obtained in the same manner as in Example 1 except that the addition amounts of the lithium sulfide powder, the phosphorus pentasulfide powder, the lithium chloride powder, and the lithium carbonate powder were changed such that the entire composition of the sulfide solid electrolyte and the composition ratio of the argyrodite crystal were the ratios described in the "entire composition (at ratio)" section and the "crystal phase (argyrodite) composition (at ratio)" section of Table 1, respectively. The content of P with respect to the content of the Ha in the raw material mixture is as described in "PIHa (molar ratio)" in Table 1.

In each of Examples 4 to 8 and Examples 11 and 12, a lithium bromide powder (manufactured by Sigma Corporation, purity: 99.995%) was further added as a raw material to be a Br source. Further, in Example 8, SiO₂ was also added as an M source to form the M-O bond.

### (Examples 9, 11, and 12)

Sulfide solid electrolytes were obtained in the same manner as in Example 1 except that the addition amounts of the lithium sulfide powder, the phosphorus pentasulfide powder, and the lithium chloride powder were changed such that the entire composition of the sulfide solid electrolyte and the composition ratio of the argyrodite crystal were the ratios described in the "entire composition (at ratio)" section and the "crystal phase (argyrodite) composition (at ratio)" section of Table 1, respectively, and the lithium oxide powder was used instead of the lithium carbonate powder. That is, the lithium oxide is a compound containing O, and is used as a compound to be an oxygen source instead of the lithium carbonate powder. The content of P with respect to the content of the Ha is as described in "PIHa (molar ratio)" in Table 1.

### (Entire Composition)

The sulfide solid electrolyte weighed in a glove box was dissolved in an alkali aqueous solution, and a composition analysis was performed for each element.

Specifically, P, S, and Si were subjected to the ICP emission spectrometry (apparatus: model number PS3520UV DDII, manufactured by Hitachi High-Tech Science Corporation).

Li was analyzed by the atomic absorption (apparatus: model ZA3300 manufactured by Hitachi High-Tech Corporation). At the time of Li measurement, CsCI was added so as to have a solution concentration of 0.1%.

Cl and Br were analyzed by the ion chromatography (apparatus: model number ICS-2100 (column: AS11HC) manufactured by Thermo Fisher Scientific Inc). At this time, a small amount of H₂O₂ was added and diluted with ultrapure water for measurement.

O was determined by an inert gas fusion-infrared absorbing method to be described later using the oxygen nitrogen hydrogen analysis (ONH 836 manufactured by LECO Corporation).

A formulation composition in which P was normalized to 1.0 with respect to the entire composition of the sulfide solid electrolyte determined by the analysis is shown in the "entire composition (at ratio)" section of an "entire composition (LiₐMS_{b}Ha_{c}Oₓ)" in Table 1, taking into account the excess content of P. It was found that a result of the composition analysis was approximately consistent with the formulation composition within a range of ± 5%. Further, when the entire composition of the sulfide solid electrolyte is LiₐMS_{b}Ha_{c}Oₓ, the value represented by (b + c) and the value represented by {6 - (x/2)} are also shown in Table 1.

### (Crystal Phase)

A pattern was obtained for the sulfide solid electrolyte by using an X-ray diffractometer (Smart Lab, manufactured by Rigaku Corporation). Measurement conditions were as follows.

Radiation Source: CuKa ray (λ = 1.5418 A), tube bulb voltage: 45 kV, tube bulb current: 200 mA, scanning angle: 10° to 100°, scanning speed: 5°/min, number of steps: 0.01°/step. Measurement was performed in an air non-exposure environment.

From the obtained XRD pattern, it was found that the sulfide solid electrolyte contained the argyrodite crystal. Further, in the case in which another crystal other than the argyrodite crystal was included, Rietveld analysis was performed from the XRD pattern to identify the other crystal as the impurity crystal and determine a content thereof.

Results are shown in "impurity crystal (mass%)" in Table 2. The impurity crystal in each of Examples 1 to 8 is a total content of lithium halide, lithium phosphate, and lithium thiophosphate.

The "crystal phase (argyrodite) composition ratio" shown in Table 1 is a composition of only the argyrodite crystal, which is obtained before adding too much P, that is, by removing a composition that forms the M-O bond, which is the polyanionic structure different from the anion constituting the argyrodite crystal, from the above-mentioned entire composition.

### (Polyanionic Structure)

The sulfide solid electrolyte was analyzed using ³¹P-NMR (ECZ700, manufactured by JEOL Ltd.). As a result, a peak observed in a range of 0 ppm to 20 ppm was defined as PO₄³⁻, a peak observed in a range of 30 ppm to 50 ppm was defined as PO₃S³⁻, a peak observed in a range of 60 ppm to 75 ppm was defined as PO₂S₂³⁻, and a peak observed in a range of 75 ppm to 80 ppm was defined as POS₃³⁻, and a molar ratio of each of the polyanionic structures was obtained from a ratio of area intensity of the peak.

As a result, in Example 5, [PO₄³⁻] = 0.2, [POS₃³⁻] = 0.1, [PO₂S₂³⁻] = 0.4, and [PO₃S³⁻] = 0.3, and a value represented by {[PO₄³⁻]/([PO₄³⁻] + [POS₃³⁻] + [PO₂S₂³⁻] + [PO₃S³⁻])} was 0.2. Further, in Example 12, [PO₄³⁻] = 0.8, [POS₃³⁻] ≤ 0.1, [PO₂S₂³⁻] < 0.1, [PO₃S³⁻] < 0.1, and a value represented by {[PO₄³⁻]/([PO₄³⁻] + [POS₃³⁻] + [PO₂S₂³⁻] + [PO₃S³⁻])} was 0.8.

### (M-O bond)

The total content of 0 contained in the sulfide solid electrolyte was determined by the inert gas fusion-infrared absorbing method using the oxygen nitrogen hydrogen analysis (ONH 836 manufactured by LECO Corporation). Specific measurement conditions are as follows.

Conditions: a sulfide solid electrolyte was placed in a copper capsule and sealed in an air non-exposure environment, and was placed in a graphite crucible heated in a helium atmosphere using an electrode furnace with an output of 4,500 W. Oxygen in a sample reacts with oxygen in the graphite crucible to generate carbon monoxide and carbon dioxide, and a total content of oxygen was calculated from peak intensity of carbon monoxide and carbon dioxide observed in an infrared absorption spectrum, and a charged weight of the sulfide solid electrolyte as the sample.

Next, the ³¹P-NMR analysis was performed using P, which is the element M whose presence was found in the above (entire composition) analysis, as a measurement nucleus to determine the amount of 0 forming the M-0 bond. Specifically, the amount of 0 forming the M-O bond was determined by adding the internal standard substance and comparing peak areas. In Example 8, a content of Si was extremely small, and considering measurement sensitivity of a ²⁹P-NMR analysis, it was determined that an appropriate result cannot be obtained, and for a Si-O bond, calculation was made on the assumption that all Si determined by the ICP emission spectrometry formed the Si-0 bond.

A proportion of O bonded to M in a total content of 0 was determined from a total content of 0 obtained by the above-described oxygen nitrogen hydrogen analysis and the amount of 0 forming the M-O bond obtained by the NMR analysis.

Results are shown in an "M-O bond (%)" section in Table 2.

### (([O]_{T} - [O]_{A})/[O]_{T})

In the same manner as in the method described in the above (M-O bond), the total content [O]_{T} of 0 contained in the sulfide solid electrolyte was determined by the oxygen nitrogen hydrogen analysis.

Next, from a result of Rietveld analysis of the XRD pattern obtained in the above (entire composition), a total content [O]_{A} of 0 constituting the crystal structure of the crystal phase was determined.

Using the obtained values of [O]_{T} and [O]_{A}, a proportion of 0 that does not constitute the crystal structure was calculated from a formula {([O]_{T} - [O]_{A})/[O]_{T}}.

Results are shown in a "([O]_{T} - [O]_{A})/[O]_{T}" section in Table 2.

### (Lithium Ion Conductivity)

The sulfide solid electrolyte was formed into a powder body under pressure of 380 MPa, the powder body was used as a measurement sample, and the lithium ion conductivity was measured using an AC impedance measuring device (potentiostat/galvanostat VSP, manufactured by Bio-Logic Sciences Instruments). The measurement conditions were as follows: a measurement frequency of 100 Hz to 1 MHz, a measurement voltage of 100 mV, and a measurement temperature of 25°C.

Results are shown in a "σ25 (mS/cm)" in Table 2. When a value of the lithium ion conductivity is 4 mS/cm or more, it can be said that as the electrolyte to be used for the lithium-ion secondary battery, the value is good.

### (Evaluation: Heat Resistance)

After a heat treatment was performed at 475°C for 30 minutes for the sulfide solid electrolyte, the lithium ion conductivity was measured in the same manner as described above (evaluation: lithium ion conductivity). A proportion of the lithium ion conductivity after the heat treatment was determined when the lithium ion conductivity before the heat treatment was 100%. Results are shown in "heat resistance (%)" in Table 2. If the proportion of the lithium ion conductivity after the heat treatment is 50% or more of the lithium ion conductivity before the heat treatment, it can be said that the heat resistance is good.

**Table 1**

| | Entire composition (LiₐMS_{b}Ha_{c}Oₓ) | | | Crystal phase (argyrodite) composition ratio | P/Ha (molar ratio) |
|---|---|---|---|---|---|
| | Entire composition (at ratio) | b + c | 6 - (x/2) | | |
| Example 1 | Li_{5.0}P_{1.0}S_{4.0}Cl_{1.5}O_{0.2} | 5.5 | 5.9 | Li_{5.4}P_{1.0}S_{4.4}Cl_{1.6} | 0.67 |
| Example 2 | Li_{5.0}P_{1.0}S_{4.0}Cl_{1.5}O_{0.4} | 5.5 | 5.8 | Li_{5.4}P_{1.0}S_{4.4}Cl_{1.6} | 0.67 |
| Example 3 | Li_{4.9}P_{1.0}S_{3.7}Cl_{1.33}O_{0.6} | 5.0 | 5.7 | Li_{5.4}P_{1.0}S_{4.4}Cl_{1.6} | 0.75 |
| Example 4 | Li_{5.0}P_{1.0}S_{4.3}Cl_{0.77}Br_{0.77}O_{0.05} | 5.8 | 6.0 | Li_{5.4}P_{1.0}S_{4.4}Cl_{0.8}Br_{0.8} | 0.65 |
| Example 5 | Li_{4.9}P_{1.0}S_{4.3}Cl_{0.77}Br_{0.77}O_{0.2} | 5.8 | 5.9 | Li_{5.4}P_{1.0}S_{4.4}Cl_{0.8}Br_{0.8} | 0.65 |
| Example 6 | Li_{5.0}P_{1.0}S_{4.0}Cl_{0.75}Br_{0.75}O_{0.4} | 5.5 | 5.8 | Li_{5.4}P_{1.0}S_{4.4}Cl_{0.8}Br_{0.8} | 0.67 |
| Example 7 | Li_{4.9}P_{1.0}S_{3.7}Cl_{0.67}Br_{0.67}O_{0.6} | 5.0 | 5.7 | Li_{5.4}P_{1.0}S_{4.4}Cl_{0.8}Br_{0.8} | 0.75 |
| Example 8 | Li_{5.0}P_{0.9}Si_{0.1}S_{4.1}Cl_{0.74}Br_{0.74}O_{0.2} | 5.7 | 5.9 | Li_{5.4}P_{1.0}Si_{0.1}S_{4.4}Cl_{0.8}Br_{0.8} | 0.68 |
| Example 9 | Li_{5.4}P_{1.0}S_{4.4}Cl_{1.6} | 6.0 | 6.0 | Li_{5.4}P_{1.0}S_{4.4}Cl_{1.6} | 0.63 |
| Example 10 | Li_{5.4}P_{1.0}S_{4.4}Cl_{1.6}O_{0.2} | 6.0 | 5.9 | Li_{5.4}P_{1.0}S_{4.4}Cl_{1.6} | 0.63 |
| Example 11 | Li_{4.8}P_{1.0}S_{3.8}Cl_{0.95}Br_{0.57}O_{0.2} | 5.6 | 5.9 | Li_{5.0}P_{1.0}S_{4.0}Cl_{1.0}Br_{0.6} | 0.66 |
| Example 12 | Li_{5.0}P_{1.0}S_{4.1}Cl_{0.74}Br_{0.74}O_{0.2} | 5.7 | 5.9 | Li_{5.4}P_{1.0}S_{4.4}Cl_{0.8}Br_{0.8} | 0.68 |

**Table 2**

| | M-O bond (%) | ([O]_{T} - [O]_{A})/[O]_{T} | Impurity crystal (mass%) | σ25 (mS/cm) | Heat resistance (%) |
|---|---|---|---|---|---|
| Example 1 | 80 | 0.8 | 0.5% or less | 6.8 | 95 |
| Example 2 | 80 | 0.83 | 0.5% or less | 7.2 | 95 |
| Example 3 | 70 | 0.76 | 0.5% or less | 7.4 | 85 |
| Example 4 | 90 | 0.78 | 1.2% | 9.5 | 95 |
| Example 5 | 80 | 0.81 | 1.5% | 9.3 | 90 |
| Example 6 | 80 | 0.75 | 1.1% | 9.1 | 90 |
| Example 7 | 70 | 0.73 | 0.5% or less | 8.8 | 70 |
| Example 8 | 80 | 0.82 | 0.5% or less | 9.9 | 90 |
| Example 9 | - | - | 0.5% or less | 3.1 | 20 |
| Example 10 | 70 | 0.71 | 5.0% (LiCl) | 1.3 | 75 |
| Example 11 | 20 | 0.1 | 2.0% (LiHa) | 2.5 | 40 |
| Example 12 | 10 | 0.1 | 2.5% (Li₃PO₄) 1.0% (LiHa) | 3.7 | 35 |

From the above results, except for Example 9, the sulfide solid electrolytes each include the crystal phase including the argyrodite crystal, and the polyanionic structure that has the P-0 bond and is different from the anion constituting the crystal. From results of Example 9, it can be found that when there is no polyanionic structure, the lithium ion conductivity is low and the heat resistance is deteriorated. Further, although the heat resistance is improved by having the M-0 bond including the P-0 bond as in Example 10, many impurity crystals precipitate because the relationship of (b + c) < {6 - (x/2)} is not satisfied. As a result, high lithium ion conductivity was not obtained.

It was found that the sulfide solid electrolyte in each of Examples 1 to 8 had a high proportion of M-0 bonds, and also satisfied (b + c) < {6 - (x/2)} when the entire composition was LiₐMS_{b}Ha_{c}Oₓ, thereby exhibiting the high lithium ion conductivity and the excellent heat resistance. Further, it was found that the larger the difference between (b + c) and {6 - (x/2)}, the fewer the content of the impurity crystals there were.

Further, in Example 10, (b + c) < {6 - (x/2)} was not satisfied, the number of impurity crystals increased, and the lithium ion conductivity decreased. In Examples 11 and 12, lithium oxide was used as the compound to be the oxygen source, and even if (b + c) < {6 - (x/2)} was satisfied, the heat resistance was poor due to the small proportion of the M-0 bonds.

It was found that the lithium ion conductivity was increased by containing Br in addition to Cl as the Ha, and the lithium ion conductivity tended to increase as the number of the impurity crystals decreased.

Although the present invention has been described in detail with reference to specific embodiments, it is apparent to those skilled in the art that various changes and modifications can be made without departing from the spirit and scope of the present invention. The present application is based on a Japanese Patent Application (No. 2021-162228) filed on September 30, 2021, and the contents thereof are incorporated herein by reference.

## Claims

1. A sulfide solid electrolyte to be used for a lithium-ion secondary battery, the sulfide solid electrolyte comprising:
a crystal phase and an anion, wherein
the crystal phase comprises an argyrodite crystal comprising Li, P, S, and Ha,
the Ha is at least one element selected from the group consisting of F, Cl, Br, and 1,
the anion comprises an oxide anion having a P-0 bond in which P and 0 are bonded,
at least a part of the oxide anion having the P-0 bond is different from an anion constituting the argyrodite crystal and constitutes a polyanionic structure,
when an entire composition of the sulfide solid electrolyte is LiₐMS_{b}Ha_{c}Oₓ, relationships of 4 < a < 7, 3 < b < 6, 0 < c < 2, 0 < x, and 3 < (b + c) < {6 - (x/2)} are satisfied,
the M is at least one element selected from the group consisting of a metal element and a metalloid element in groups 2 to 15 of a periodic table, the at least one element comprising at least P, and
60% or more of a total content of 0 is bonded to the M.

2. The sulfide solid electrolyte according to claim 1, wherein the polyanionic structure comprises at least PO₄³⁻ and PO₂S₂³⁻,
a relationship of 0.1 < {[PO₄³⁻]/([PO₄³⁻] + [POS₃³⁻] + [PO₂S₂³⁻] + [PO₃S³⁻])} ≤ 0.5 is satisfied, the relationship being expressed by a content represented by mol%, and
among contents of PO₄³⁻, POS₃³⁻, PO₂S₂³⁻ and PO₃S³⁻, a content of PO₂S₂³⁻ is highest.

3. The sulfide solid electrolyte according to claim 1 or 2, wherein a relationship of 0.5 < {([O]_{T} - [O]_{A})/[O]_{T}} < 1 is satisfied where [O]_{T} is a total content of 0 and [O]_{A} is a total content of O constituting a crystal structure of the crystal phase.

4. The sulfide solid electrolyte according to any one of claims 1 to 3, wherein a total content of lithium halide, lithium phosphate, and lithium thiophosphate is 0.6 mass% or less.

5. The sulfide solid electrolyte according to any one of claims 1 to 4, wherein relationships of 0 < x < 1 and {3.5 - (x/2)} < (b + c) < {6 - (x/2)} are further satisfied in the entire composition of LiₐMS_{b}Ha_{c}Oₓ.

6. The sulfide solid electrolyte according to any one of claims 1 to 5, wherein the argyrodite crystal comprises Cl as the Ha.

7. The sulfide solid electrolyte according to any one of claims 1 to 6, wherein the argyrodite crystal comprises Cl and Br as the Ha.

8. The sulfide solid electrolyte according to claim 7, wherein a relationship of 0.1 ≤ (c1/c2) < 10 is satisfied where cl (at%) is a content of Cl in the argyrodite crystal and c2 (at%) is a content of Br in the argyrodite crystal.

9. A method for producing a sulfide solid electrolyte to be used for a lithium-ion secondary battery, the method comprising:
mixing a raw material comprising Li, P, S, and Ha and a compound to be an oxygen source to obtain a raw material mixture;
heating the raw material mixture to obtain a molten material; and
cooling the molten material to obtain an argyrodite crystal and a polyanionic structure of an oxide anion that has a P-0 bond and is different from an anion constituting the argyrodite crystal, wherein
the Ha is at least one element selected from the group consisting of F, Cl, Br, and 1,
the compound to be the oxygen source comprises at least one selected from the group consisting of Li₂CO₃, Li₂SO₄, and Li₃PO₄, and
in the raw material mixture, a content of P is in a molar ratio of 0.5 to 0.8 with respect to a content of the Ha.

10. The method for producing a sulfide solid electrolyte according to claim 9, wherein the heating is performed at a temperature of 650°C or higher.

11. The method for producing a sulfide solid electrolyte according to claim 9 or 10, wherein the cooling is performed at a cooling rate of 0.01°C/sec or more.
